# EUROPÄISCHE PATENTSCHRIFT

(11) **EP 2 834 175 B1**
(45) Veröffentlichungstag und Bekanntmachung des Hinweises auf die Patenterteilung: **02.12.2015**
(21) Anmeldenummer: 13756282.3
(22) Anmeldetag: 18.07.2013
(51) Int. Cl.: B65G 47/252, B65G 47/91

(54) **VORRICHTUNG ZUM HANDHABEN VON PLATTENFÖRMIGEN GEGENSTÄNDEN**
DEVICE FOR HANDLING PLATE-SHAPED OBJECTS
DISPOSITIF POUR LA MANIPULATION D'OBJETS EN FORME DE PLAQUE

(30) Priorität: 10.09.2012 AT 9872012
(43) Veröffentlichungstag der Anmeldung: 11.02.2015
(73) Patentinhaber: Rosendahl Nextrom GmbH, 8212 Pischelsdorf (AT)
(72) Erfinder: SCHNUR, Hans, 8273 Ebersdorf (AT); JANSKY, Franz, Albert, 8272 Sebersdorf (AT)
(74) Vertreter: Beer & Partner Patentanwälte KG
(86) Internationale Anmeldenummer: PCT/AT2013/000122
(87) Internationale Veröffentlichungsnummer: WO 2014/036576

(56) Entgegenhaltungen:
- AT-B- 379 565
- US-A- 2 119 585

## Beschreibung

Die Erfindung betrifft eine Vorrichtung zum Handhaben (Umsetzen) plattenförmiger Gegenstände, um diese aus einem Stapel solcher plattenförmiger Gegenstände zu entnehmen und mit Abstand von dem Stapel, beispielsweise auf eine Fördervorrichtung (Förderband), abzulegen, mit den Merkmalen des Oberbegriffes von Anspruch 1 (WO 1992/01619A).

Insbesondere betrifft die Erfindung eine Vorrichtung zum Handhaben von plattenförmigen Gegenständen, mit der plattenförmige, nebeneinander stehend angeordnete Gegenstände, beispielsweise Batterieplatten oder Akkumulatorplatten, aus einem in einem im Wesentlichen horizontalen Magazin aufgenommenem Stapel entnommen und auf ein Förderband abgelegt werden können. Die Vorrichtung weist einen Entnahmegreifer auf, der beispielsweise wenigstens einen Saugteller aufweist und der zwischen einer die vorderste Platte des Stapels erfassenden "Entnahmestelle" und einer "Abgabestelle", in welcher der Gegenstand vom Entnahmegreifer gelöst wird und die beispielsweise einer Fördervorrichtung für plattenförmige Gegenstände zugeordnet ist, hin und her bewegbar ist.

Aus der AT 241 565 B und der AT 352 198 B sind Vorrichtungen bekannt, die plattenförmige Gegenstände übereinanderliegend in einem Magazin aufnehmen. Diese übereinanderliegende Anordnung der plattenförmigen Gegenstände im Stapel hat zur Folge, dass insbesondere bei größeren Stapeln bei der Entnahme des jeweils untersten plattenförmigen Gegenstandes erhebliche Reibungskräfte auftreten, die das Vereinzeln der plattenförmigen Gegenstände behindern. Dies insbesondere, wenn die plattenförmigen, im Magazin aufgenommenen Gegenstände Platten oder Scheider für Akkumulatoren sind. In der AT 352 198 B ist daher schon vorgeschlagen worden, im Abstand über der Entnahmestelle eine unabhängig von den Entnahmevorrichtungen betätigbare Klemmvorrichtung vorzusehen, um das Gewicht des Stapels beim Entnahmevorgang aufzufangen.

Aus der GB 1,522,154 A und der GB 1,581,764 A sind Vorrichtungen zum Umsetzen plattenförmiger Gegenstände bekannt. Diese bekannten Vorrichtungen benötigen an der Entnahmestelle vorgesehene, wegklappbare Rückhaltevorrichtungen. Diese Rückhaltevorrichtungen sind insoferne problematisch, als sie mit den Bewegungen des Entnahmegreifers synchronisiert sein müssen. Derartige Rückhaltevorrichtungen in Form von Rückhalteplatten oder -flügeln sind bei den bekannten Vorrichtungen aber nötig, da dort zum Vorwärtsbewegen der plattenförmigen Gegenstände an diesen von unten her angreifende Förderketten vorgesehen sind.

Vorrichtungen zum Entnehmen von plattenförmigen Gegenständen aus Stapeln solcher Gegenstände sind weiters aus der AT 387 294 B, der US 5,503,519 A und der EP 1 044 151 A bekannt.

Weitere Vorrichtungen zum Handhaben von plattenförmigen Gegenständen sind aus der AT 379 565 B und der AT 398 256 B bekannt.

Die AT 398 256 B betrifft eine Vorrichtung zum Entnehmen von Akkumulatorplatten aus einem Stapel und zum Ablegen der Akkumulatorplatten auf eine Fördereinrichtung. Diese besitzt zwei abwechselnd jeweils eine Akkumulätorplatte erfassende Greifer. Die Greifer werden abwechselnd in eine die erste Akkumulatorplatte des Stapels erfassende Entnahmestelle und in eine Abgabestelle, die der Fördereinrichtung zugeordnet ist, hin- und herbewegt. Die Greifer sind an in der Vorrichtung verschwenkbar gelagerten Hebeln gelagert. Jeder Greifer ist an seinem Hebel um eine zu dessen Schwenkachse parallel ausgerichtete Drehachse um 360° verdrehbar gelagert und kann mit einem Antrieb in einer Richtung gedreht werden. Um das Erfassen einer Akkumulatorplatte zu verbessern, stehen die Greifer gegenüber dem sie tragenden Hebel still, wenn sich diese in ihrer der Entnahmestelle entsprechenden Schwenkstellung befinden.

Die WO 1992/01619 A offenbart eine Vorrichtung zum Umsetzen plattenförmiger Gegenstände, wobei die Gegenstände lotrecht ausgerichtet sind und horizontal abgegeben werden. Ein Entnahmegreifer ist hin und her bewegbar und wird während der Bewegung verdreht. Der Entnahmegreifer ist auf einem Hebel gegenüber dem Hebel verdrehbar angeordnet, sodass der Hebel von einem Antrieb hin und her schwenkbar ist. Weiters ist der Entnahmegreifer mit einer drehbar gelagerten Welle verbunden.

Die JP 7242335 A und die WO 1998/39240 A1 offenbaren Vorrichtungen zum Umsetzen plattenförmiger Gegenstände aus einer Entnahmestelle, bei welchen der Entnahmegreifer entweder nur hin und her bewegt wird oder der Entnahmegreifer auf einer rotierenden Scheibe aufgesetzt ist.

Alle bekannten Vorrichtungen zum Handhaben von plattenförmigen Gegenständen, insbesondere Batterie- oder Akkumulatorplatten, bedienen sich vergleichsweise aufwändiger Steuerungen und Hebelanordnungen, um den Entnahmegreifer zwischen der Entnahmestelle und der Abgabestelle zu bewegen, da bei dieser Bewegung der Entnahmegreifer nicht nur zwischen den genannten Stellen hin und her bewegt werden muss, sondern auch ein Schwenken der von ihm erfassten plattenförmigen Gegenstände um Winkel in der Größenordnung von 90° ausführen muss.

Eine Vorrichtung zum Handhaben von Batterieplatten ist als Bestandteil einer Eintasch- und Stapelmaschine Type BMV10 der Rosendahl Maschinen GmbH in Pischelsdorf (Österreich) bekannt geworden. Bei dieser bekannten Vorrichtung wird der Entnahmegreifer durch eine aufwändige Hebelmechanik zwischen der Entnahme- und der Abgabestelle hin und her bewegt. Um die Bewegung zwischen der Entnahmestelle und der Abgabestelle ausführen zu können, ist dem Entnahmegreifer eine Hebelmechanik zugeordnet, die mit Hilfe eines Kurbeltriebes, umfassend eine Pleuelstange und eine Kurbel, hin und her schwenkbar ist. Da der Entnahmegreifer in der Entnahmestelle gegenüber der Abgabestelle um einen Winkel in der Größenordnung von 90° geschwenkt sein muss, wird der Entnahmegreifer während der vorher beschriebenen Hin- und Herbewegung zusätzlich über eine Kulisse geführt und in Verbindung mit einem Hebel, der einen fixen Drehpunkt an der Aufhängung und einen am Entnahmegreifer hat, um einen Winkel in der Größenordnung von 90° geschwenkt.

Diese Vorrichtung hat sich an sich gut bewährt, ist aber hinsichtlich ihrer Leistungsfähigkeit an mechanische Grenzen gestoßen, sodass Bedarf an einer Vorrichtung der eingangs genannten Gattung besteht, die schneller und prozesssicherer als die bekannten Vorrichtungen arbeitet.

Der Erfindung liegt die Aufgabe zugrunde, eine Vorrichtung der eingangs genannten Gattung vorzuschlagen, bei welcher der Antrieb für die kombinierte Hin- und Her- und Schwenkbewegung des Entnahmegreifers mit einfachen Mitteln erreicht wird.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Durch das mit dem Entnahmegreifer verbundene Rad, das beim Schwenken des Hebels an dem länglichen, flexiblem Element abrollt, wird auf einfache Weise die Bewegung des Entnahmegreifers zwischen der Entnahmestelle und der Abgabestelle mit der Drehbewegung des Entnahmegreifers kombiniert, wobei ohne aufwändige Steuerung eine Synchronität der Bewegungen gewährleistet ist.

Da bei der erfindungsgemäßen Vorrichtung für das Verschwenken des Trägers für den Entnahmegreifer ein Antrieb, beispielsweise ein Kurbeltrieb, vorgesehen ist, kann die erfindungsgemäße Vorrichtung einfach mit dem übrigen Teil einer Anlage, in der sie vorgesehen ist, beispielsweise einer Anlage zum Eintaschen und Abstapeln von Batterieplatten, synchronisiert werden.

Wenn der Entnahmegreifer der erfindungsgemäßen Vorrichtung mit wenigstens einem mit Unterdruck beaufschlagtem Saugkopf (Saugteller) bestückt ist, durch den der plattenförmige Gegenstand gehalten wird, während sich der Entnahmegreifer von der Entnahmestelle zur Abgabestelle bewegt, ist es erforderlich, dass der Unterdruck in der Abgabestelle, in der ein plattenförmiger Gegenstand, der vom Entnahmegreifer gelöst (losgelassen) werden soll und beispielsweise auf ein Förderband abgelegt wird, aufgehoben wird. Dies erfolgt in einer bevorzugten Ausführungsform der Erfindung durch eine mechanische Vakuumbelüftung. Diese mechanische Vakuumbelüftung kann in einer bevorzugten Ausführungsform einen Betätigungsknopf aufweisen, der auf einen maschinengestellfesten Anschlag aufläuft, wenn der Entnahmegreifer in der Abgabestelle ist. Bevorzugt ist, dass der Anschlag, an welchem der Betätigungsknopf für die mechanische Vakuumbelüftung aufläuft, in seiner Lage einstellbar ist.

Die Drehbewegung des zuvor beschriebenen Entnahmegreifers der bekannten Vorrichtung BMV10 wird von der Kulisse und der Bewegung des Kurbeltriebes vorgegeben. Beim erfindungsgemäßen Plattenleger wird die Drehbewegung von der Anordnung der einen Achse zu der anderen Achse sowie der unterschiedlichen Durchmesser der, vorzugsweise als Kettenräder ausgeführten, Antriebselemente und der Hub des Kurbeltriebs vorgegeben. Durch die differenzierte Gestaltung der Mechanik und den Verzicht auf die Kulisse ergibt sich eine Bewegung des Entnahmegreifers zwischen der Entnahme- und der Abgabestelle, die im Vergleich zum Entnahmegreifer der bekannten Vorrichtung BMV10 runder ist. Durch den Einsatz eines kinematisch optimierten Kräftedreiecks sind höhere Taktraten, ein kleinerer Drehmömentbedarf und eine Schonung der Mechanik möglich.

Aufgrund der reduzierten und vereinfachten Mechanik und Bauteilanordnung bzw. der erfindungsgemäßen Vorrichtung ergeben sich Vorteile in der Wartung und Instandhaltung sowie eine bessere Zugänglichkeit. Ein weiterer Vorteil aus der erfindungsgemäßen Mechanik ist eine deren Einstellbarkeit.

In einer Ausführungsform der Erfindung kann vorgesehen sein, dass der Hebel zwei mit Abstand voneinander angeordnete, zueinander parallele und miteinander verbundene Platten aufweist und dass das auf der Welle des Entnahmegreifers befestigte Rad, das am Hebel befestigte Rad und die Umlenkscheibe zwischen den Platten angeordnet sind.

Weitere Einzelheiten und Merkmale der Erfindung ergeben sich aus der nachstehenden Beschreibung bevorzugter Ausführungsbeispiele unter Bezugnahme auf die angeschlossenen Zeichnungen. Es zeigt:
- Fig. 1: schematisiert das Grundprinzip einer erfindungsgemäßen Vorrichtung zum Handhaben von plattenförmigen Gegenständen in einer ersten Stellung (Entnahmegreifer in der Entnahmestelle),
- Fig. 2: die Vorrichtung aus Fig. 1 in einer zweiten Stellung (Entnahmegreifer in der Abgabestelle),
- Fig. 3: eine praktische Ausführungsform einer erfindungsgemäßen Vorrichtung in der Stellung gemäß Fig. 1 (Entnahmegreifer in der Entnahmestelle),
- Fig. 4: die Vorrichtung aus Fig. 3 mit Entnahmegreifer in der Abgabestelle,
- Fig. 5: die Vorrichtung aus Fig. 3 und 4 mit Entnahmegreifer in der Entnahmestelle,
- Fig. 6: die Vorrichtung in der Stellung gemäß Fig. 5 in anderer Ansicht,
- Fig. 7: die Vorrichtung mit Entnahmegreifer in der Abgabestelle und
- Fig. 8: die Vorrichtung in der Stellung gemäß Fig. 7 in anderer Ansicht.

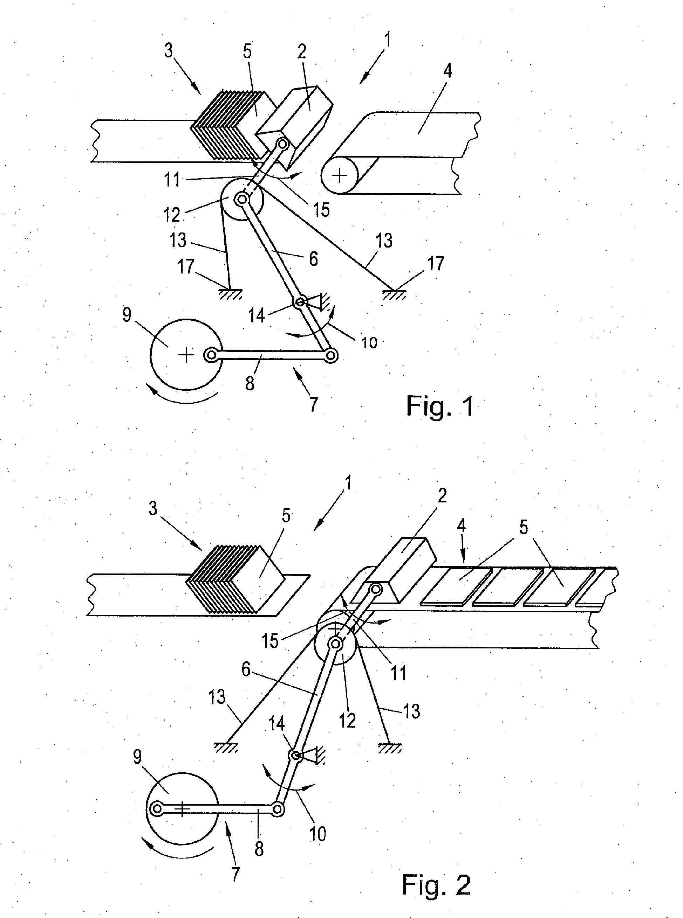

Die in den Fig. 1 und 2 schematisch gezeigte Vorrichtung 1 zum Handhaben von Gegenständen 5, insbesondere zum Entnehmen von Batterieplatten aus Stapeln 3, besitzt einen Entnahmegreifer 2, der zwischen einer einem Stapel 3 plattenförmiger Gegenstände 5, insbesondere dessen vorderen Ende, zugeordneten Entnahmestelle (Fig. 1) und einer einem aufgabeseitigen Ende eines Förderbandes 4 zugeordneten Abgabestelle (Fig. 2) hin und her bewegbar ist.

Der Entnahmegreifer 2 ist mit Saugtellern 30 bestückt, die mit Unterdruck beaufschlagt werden, um plattenförmige Gegenstände 5, wie Batterieplatten, aus dem Stapel 3 aufzunehmen und während des Umsetzens zum aufgabeseitigen Ende des Förderbandes 4 festzuhalten. Wenn der Entnahmegreifer 2 in der Stellung gemäß Fig. 2 (Abgabestelle) ist, wird der die Saugteller 30 beaufschlagende Unterdruck aufgehoben, sodass der plattenförmige Gegenstand 5 losgelassen und auf das Förderband 4 abgelegt wird.

Um die Bewegung zwischen der Entnahmestelle (Fig. 1) und der Abgabestelle (Fig. 2) ausführen zu können, ist der Entnahmegreifer 2 an einen Hebel 6 angeordnet, der mit Hilfe eines Kurbeltriebes 7, umfassend eine Pleuelstange 8 und eine Kurbel 9, in Richtung des Doppelpfeiles 10 hin und her verschwenkbar ist.

Da, wie ein Vergleich der Fig. 1 und 2 zeigt, der Entnahmegreifer 2 bei seiner Bewegung von der Entnahmestelle (Fig. 1) zur Abgabestelle (Fig. 2) auch verdreht werden muss (um einen Winkel in der Größenordnung von 90°), ist der Entnahmegreifer 2 am freien Ende des Hebels 6 über eine Welle 11 verdrehbar gelagert. Mit der Welle 11 drehfest verbunden ist ein Rad 12, beispielsweise ein Zahnrad, über das ein längliches, flexibles Element 13, das eine Kette, ein Zahnriemen, ein Keilriemen oder Ähnliches sein kann, gelegt ist. Die freien Enden des Elements 13 sind bei der Anordnung von Fig. 1 und 2 in gestellfesten Punkten 17 festgelegt, so dass sich das längliche Element 13 in Richtung seiner Längserstreckung nicht bewegen kann. Zusammen mit dem Rad 12 ergibt sich die Übersetzung für die Schwenkbewegung des Entnahmegreifers 2. Der Hebel 6 ist in einem maschinengestellfesten Lager 14 schwenkbar gelagert. Da das Element 13 über das Rad 12, das mit der Welle 11 des Entnahmegreifers 2 drehfest verbunden ist, gelegt ist, wird der Entnahmegreifer 2, wie dies durch den Doppelpfeil 15 angedeutet ist, beim Ausführen von Schwenkbewegungen des Hebels 6 (Doppelpfeil 10) gedreht, weil das Rad 12 beim Schwenken des Hebels 6 am länglichen Element 13, das sich in Richtung seiner Längserstreckung nicht bewegt, abrollt. Das Rad 12 und damit der Entnahmegreifer 2 dreht sich bei seiner Bewegung aus der Entnahmestelle in die Abgabestelle aus der in Fig. 1 gezeigten, dem Stapel 3 zugewendeten Drehlage in die in Fig. 2 gezeigte, dem Förderband 4 zugewendete Drehlage.

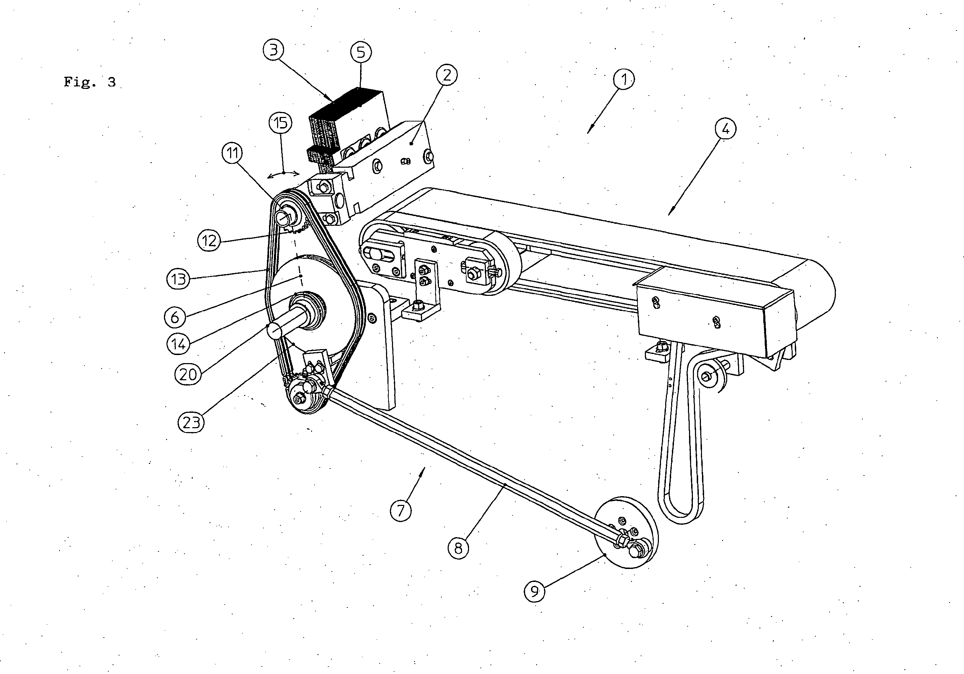

Nachstehend wird die in den Fig. 3 bis 8 gezeigte, beispielhafte Ausführungsform einer erfindungsgemäßen Vorrichtung 1 näher beschrieben.

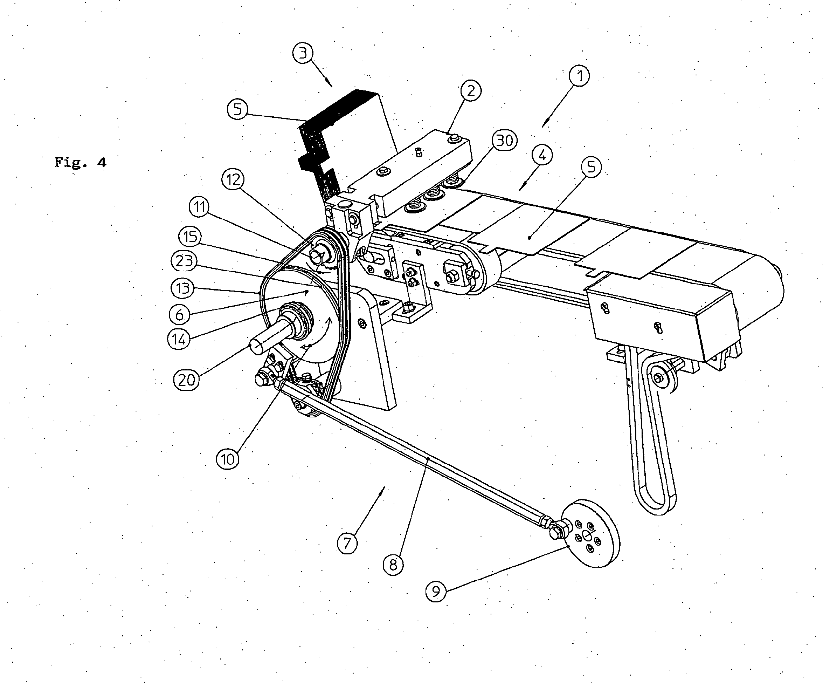

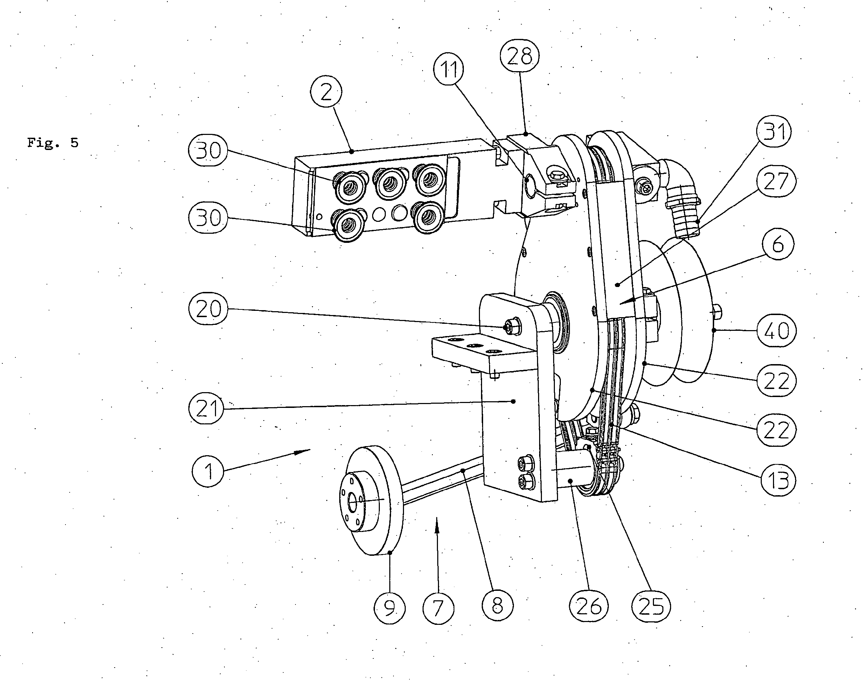

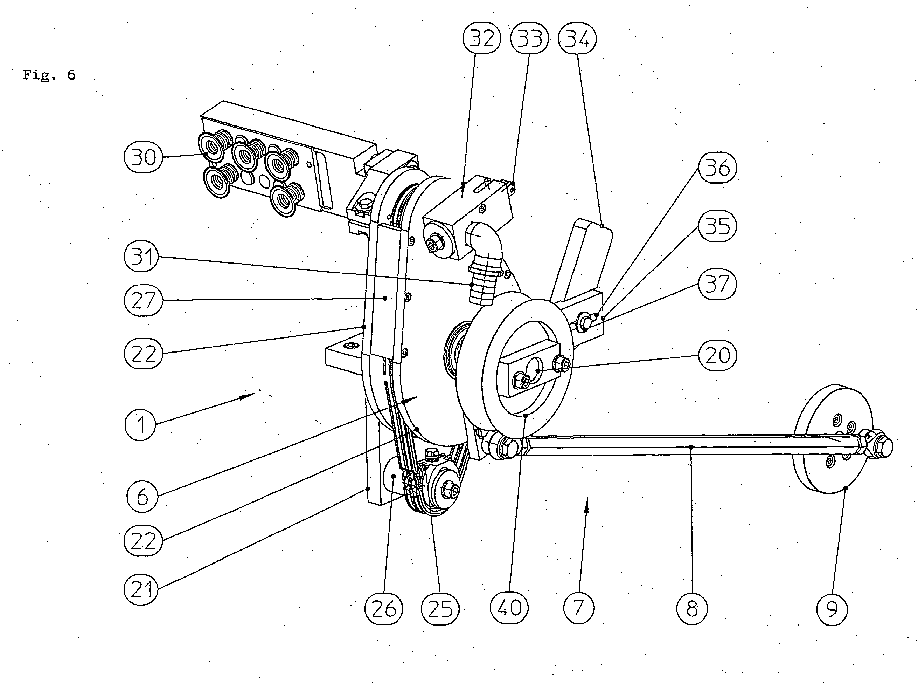

Der Hebel 6 weist bei der in den Fig 3 bis 8 gezeigten Ausführungsform zwei, etwa birnenförmige (in den Fig. 3 und 4 nicht dargestellt) Platten 22 (Fig. 5 und 6) auf, die über eine Welle 20, die das Lager 14 des Hebels 6 bildet, an einer maschinengestellfesten Halterung 21 angebracht ist.

Zwischen den Platten 22 des Hebels 6 sind Leisten 27 vorgesehen, über welche die Platten 22 des Hebels 6 mit Abstand voneinander miteinander verbunden sind. Zwischen den Platten 22 des Hebels 6 ist eine Umlenkscheibe 23 angeordnet, die nicht drehbar auf der Welle 20 sitzt. Es ist also nur der Hebel 6 gegenüber der Welle 20 verschwenkbar.

Der Kurbeltrieb 7 greift mit seiner Pleuelstange 8 an der vorderen der beiden Platten 22 des Hebels 6 unterhalb der Welle 20 und unterhalb der Umlenkscheibe 23 an.

Am in den Fig. 3 und 4 oberen Ende des Hebels 6 ist drehbar die Welle 11 des Entnahmegreifers 2 gelagert. Der Entnahmegreifer 2 ist an der Welle 11 über einen Klemmkörper 28 befestigt. Auf der Welle 11 sitzt das hier als Zahnrad ausgebildete Rad 12, über das das langgestreckte Element, das hier als Endlosglied 13 ausgebildet ist, gelegt ist.

Die Trume des Endlosgliedes 13 sind über die Umlenkscheibe 23 gelegt, die auf der Welle 20 drehfest, also unverdrehbar, angebracht ist. Dabei entsprechen die Bereich der Trume des Endlosgliedes 13, die an der Umlenkscheibe 23 anliegen, den Punkten 17 der Anordnung von Fig. 1 und 2, so dass sich das Endlosgliedes 13 in Richtung seiner Längserstreckung nicht bewegen kann. Das Endlosglied 13 ist weiters über ein Zahnrad 25 gelegt, das auf einer Welle 26 sitzt, die am Träger 21 befestigt ist. Das Zahnrad 25 ist auf der Welle 26 nicht drehbar angeordnet und dient zum Spannen des Endlosgliedes 13 sowie zu dessen Fixierung.

Wie die Fig. 3 bis 8 zeigen, ist der Entnahmegreifer 2 als "Vakuumgreifer" mit mehreren mit Unterdruck beaufschlagbaren Saugtellern 30 ausgestattet. Die Saugteller 30 des Entnahmegreifers 2 werden über einen Unterdruckanschluss 31, einen Kanal in der Welle 11 und den Klemmkörper 28 mit Unterdruck beaufschlagt.

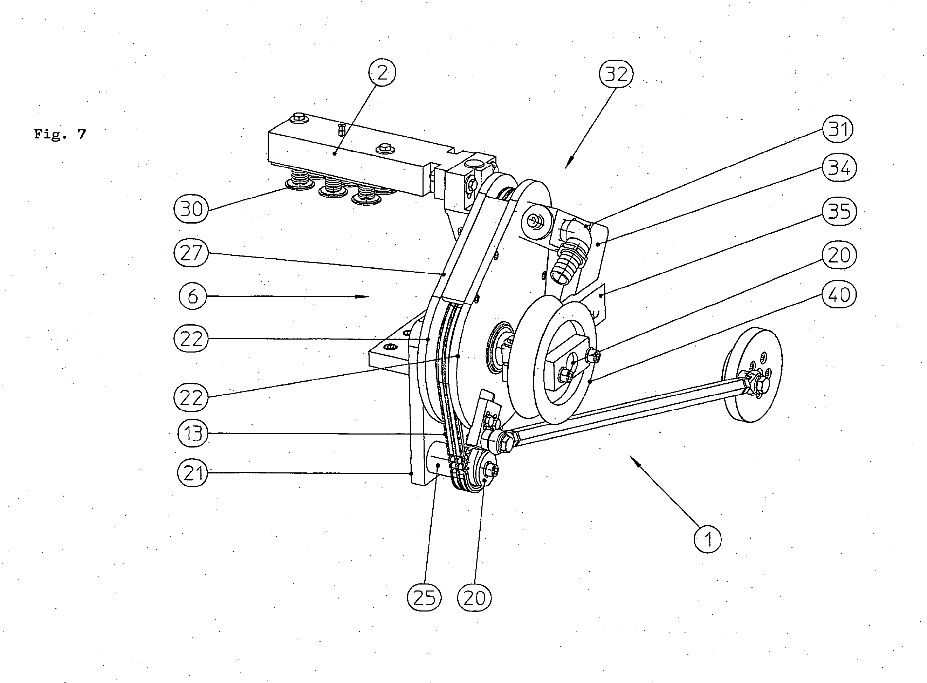

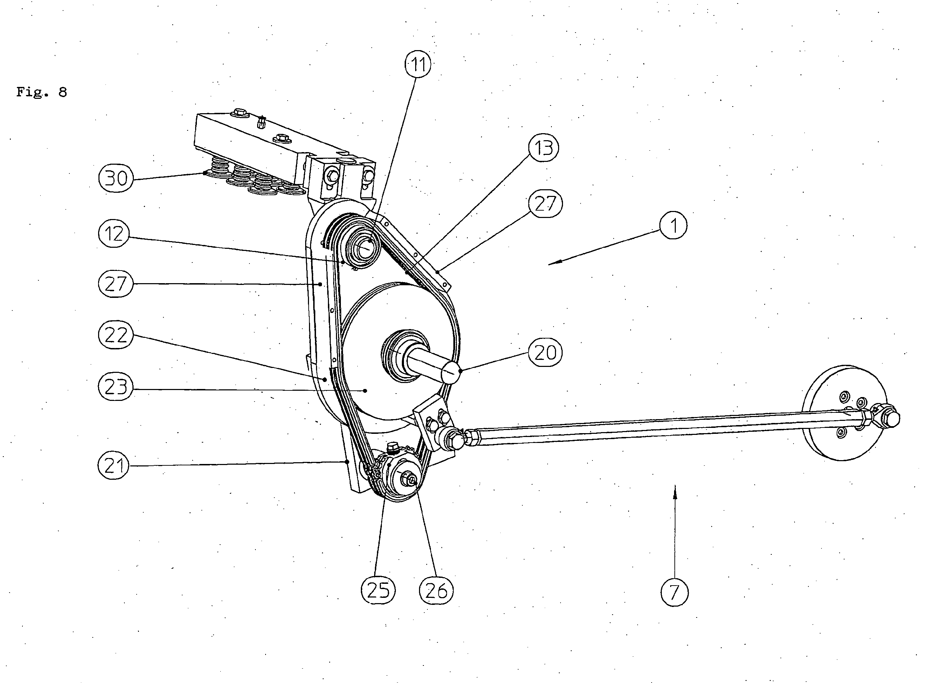

Da die Saugteller 30 des Entnahmegreifers 2 in der in den Fig. 7 und 8 gezeigten Abgabestelle nicht mit Unterdruck beaufschlagt werden dürfen, damit ein vom Entnahmegreifer 2 erfasster, plattenförmiger Gegenstand 5 (beispielsweise eine Batterieplatte) auf das Förderband 4 abgelegt werden kann, ist dem Unterdruckanschluss 31 eine mechanische Vakuumbelüftung 32 zugeordnet. Die Vakuumbelüftung 32 umfasst einen Stössel 33 als Betätigungsknopf, der in der in den Fig. 7 und 8 gezeigten Abgabestelle auf einen gestellfesten Anschlag 34 aufläuft und den an die Saugteller 30 angelegten Unterdruck aufhebt, sodass ein plattenförmiger Gegenstand 5 losgelassen und auf das Förderband 4 abgelegt wird. Beim Betätigen des Stössels 33 beim Auflaufen auf den Anschlag 34 wird eine Entlüftungsöffnung der Vakuumbelüftung 32 geöffnet, sodass der Unterdruck aufgehoben wird, sobald der Entnahmegreifer 2 in der Abgabenstelle ist.

Die Lage des Anschlages 34, der den Stössel 33 der mechanischen Vakuumbelüftung 32 betätigt, ist einstellbar. Die Einstellbarkeit ergibt sich dadurch, dass der Anschlag 34, auf den der Stössel 33 aufläuft, mit Hilfe einer Schraube 37, die einen Schlitz 36 im Träger 35 durchgreift, an einem Träger 35 verdrehbar und verschiebbar, festlegbar ist. Des Weiteren ist, wie beispielsweise Fig. 6 erkennen lässt, der Träger 35 auf der Welle 20 durch Klemmung festgelegt, sodass auch dieser in seiner Lage einstellbar ist. So kann der Zeitpunkt, im dem der Unterdruck durch Betätigen der mechanischen Vakuumbelüftung 32 aufgehoben wird, eingestellt werden.

Auf der Welle 20 ist, wie die Fig. 5 bis 8 zeigen, eine Nutrolle 40 vorgesehen, die mit Hilfe einer Halterung und zwei Schrauben auf der Welle 20 befestigt ist.

Durch Betätigen (Schwenken) des Hebels 6 mit Hilfe des Kurbeltriebes 7 wird der Entnahmegreifer 2 aus der in den Fig. 5 und 6 gezeigten Entnahmestelle in die in den Fig. 7 und 8 gezeigte Abgabestelle bewegt, wobei er, bewirkt durch das endlose, über das Zahnrad 12 und die Umlenkscheibe 23 gelegte Endlosglied 13, an dem das Zahnrad 12 beim Schwenken des Hebels 6 abrollt, gleichzeitig eine Drehbewegung um seine durch die Welle 11 definierte Achse ausführt, sodass ein plattenförmiger Gegenstand 5, insbesondere eine Batterieplatte, die im Stapel 3 im Wesentlichen lotrecht stehend angeordnet ist, über unten um einen Winkel von etwa 90° verschwenkt wird und auf ein im Wesentlichen horizontal ausgerichtetes Förderband 4 abgelegt werden kann.

Zusammenfassend kann ein Ausführungsbeispiel der Erfindung wie folgt beschrieben werden:
Eine Vorrichtung zum Umsetzen plattenförmiger Gegenstände 5 (Batterieplatten) aus einer Entnahmestelle, in der die Gegenstände 5 im Wesentlichen lotrecht ausgerichtet sind, in eine Abgabestelle, in der die Gegenstände 5 im Wesentlichen horizontal ausgerichtet sind, weist einen Entnahmegreifer 2 auf, der von einem Antrieb zwischen der Entnahmestelle und der Abgabestelle hin und her bewegbar ist und der während der Bewegung verdreht wird. Der Entnahmegreifer 2 ist auf einem Hebel 6 gegenüber dem Hebel 6 verdrehbar angeordnet. Der Hebel 6 wird von einem Antrieb 7 hin und her geschwenkt. Der Entnahmegreifer 2 ist mit einer im Hebel 6 drehbar gelagerten Welle 11 verbunden, auf der ein Rad 12 befestigt ist. Über das Rad 12 ist ein längliches, flexibles Element 13 gelegt, das in Richtung seiner Längserstreckung unbeweglich festgelegt ist. Beim Schwenken des Hebels 6 rollt das Rad 12 am länglichen Element 13 ab. So wird die Hin- und Herbewegung des Entnahmegreifers 2 von einer Drehbewegung des Entnahmegreifers 2 überlagert.

## Patentansprüche

1. Vorrichtung zum Umsetzen plattenförmiger Gegenstände (5) aus einer Entnahmestelle, in der die Gegenstände (5) im Wesentlichen lotrecht ausgerichtet sind, in eine Abgabestelle, in der die Gegenstände (5) im Wesentlichen horizontal ausgerichtet sind, mit einem Entnahmegreifer (2), der von.einem Antrieb zwischen der Entnahmestelle und der Abgabestelle hin und her bewegbar ist und der während der Bewegung verdreht wird, wobei der Entnahmegreifer (2) auf einem Hebel (6) gegenüber dem Hebel (6) verdrehbar angeordnet ist, wobei der Hebel (6) von einem Antrieb (7) hin und her schwenkbar ist, und wobei der Entnahmegreifer (2) mit einer im Hebel (6) drehbar gelagerten Welle (11) verbunden ist, **dadurch gekennzeichnet, dass** auf der Welle (11) ein Rad (12) befestigt ist, dass über das Rad (12) ein längliches, flexibles Element (13) gelegt ist und dass das
flexible Element (13) in Richtung seiner Längserstreckung unbeweglich festgelegt ist.

2. Vorrichtung nach Anspruch 1, **dadurch gekennzeichnet, dass** das flexible Element (13) endlos ist, dass das endlose Element (13) einerseits über das Rad (12) auf der Welle (11) des Entnahmegreifers (2) und andererseits über ein am Hebel (6) im Bereich des der Welle (11) des Entnahmegreifers (2) gegenüberliegenden Ende befestigtes Rad (25) gelegt ist.

3. Vorrichtung nach Anspruch 2, **dadurch gekennzeichnet, dass** das endlose Element (13) ein Zahnriemen oder eine Rollenkette ist.

4. Vorrichtung nach Anspruch 2 oder 3, **dadurch gekennzeichnet, dass** die Trume des endlosen Elementes (13) zwischen dem auf der Welle (11) des Entnahmegreifers (2) befestigten Rad (12) und dem am Hebel (6) befestigten Rad (25) an einer Umlenkscheibe (23) anliegen, und dass der Hebel (6) gegenüber der stillstehenden Umlenkscheibe (23) verschwenkbar ist.

5. Vorrichtung nach Anspruch 4, **dadurch gekennzeichnet, dass** die Umlenkscheibe (23) koaxial zur Schwenkachse (20) des Hebels (6) angeordnet ist.

6. Vorrichtung nach Anspruch 4 oder 5, **dadurch gekennzeichnet, dass** der Durchmesser der Umlenkscheibe (23) größer ist als der Durchmesser des Rades (12) auf der Welle (11) des Entnahmegreifers (2) und des am Hebel (6) befestigten Rades (25).

7. Vorrichtung nach einem der Ansprüche 1 bis 6, **dadurch gekennzeichnet, dass** der Antrieb (7) zum Schwenken des Hebels (6) ein Kurbeltrieb ist.

8. Vorrichtung nach Anspruch 7, **dadurch gekennzeichnet, dass** die Schwenkachse (14) des Hebels (6) zwischen der Welle (11) des Entnahmegreifers (2) und dem Ende des Hebels, an dem der Antrieb (7) angreift, angeordnet ist.

9. Vorrichtung nach Anspruch 7 oder 8, **dadurch gekennzeichnet, dass** die Pleuelstange (8) des Kurbeltriebes (7) am Hebel (6) im Bereich des der Welle (11) des Entnahmegreifers (2) gegenüberliegenden Endes des Hebels (6) angreift.

10. Vorrichtung nach einem der Ansprüche 1 bis 9, **dadurch gekennzeichnet, dass** am Entnahmegreifer (2) wenigstens ein mit Unterdruck beaufschlagbarer Saugteller (30) angeordnet ist.

11. Vorrichtung nach Anspruch 10, **dadurch gekennzeichnet, dass** der Saugteller (30) über einen in der Welle (11) des Entnahmegreifers (2) vorgesehenen Kanal mit Unterdruck beaufschlagbar ist.

12. Vorrichtung nach Anspruch 11, **dadurch gekennzeichnet, dass** dem Kanal eine Vakuumbelüftung (32) zugeordnet ist, die in der Abgabestelle den an den Saugteller (30) angelegten Unterdruck aufhebt.

13. Vorrichtung nach Anspruch 12, **dadurch gekennzeichnet, dass** die Vakuumbelüftung (32) einen Betätigungsstössel (33) aufweist, der in der Abgabestelle des Entnahmegreifers (2) an einem Anschlag (34) anliegt.

14. Vorrichtung nach Anspruch 13, **dadurch gekennzeichnet, dass** die Lage des Anschlages (34) einstellbar ist.

15. Vorrichtung nach einem der Ansprüche 3 bis 14, **dadurch gekennzeichnet, dass** die Räder (12, 25) gezahnt sind.

## Claims

1. Device for relocating plate-shaped objects (5) from a removal site where the objects (5) are essentially vertically aligned to a delivery site where the objects (5) are essentially horizontally aligned, with a removal gripper (2), which can be moved back and forth between the removal site and delivery site by a drive, and which is rotated during the movement, wherein the removal gripper (2) is arranged on a lever (6) so that it can be rotated relative to the lever (6), wherein the lever (6) can be swiveled back and forth by a drive (7), and wherein the removal gripper (2) is joined with a shaft (11) pivoted in the lever (6), **characterized in that** a wheel (12) is secured to the shaft (11), that an oblong, flexible element (13) is placed over the wheel (12), and that the flexible element (13) is fixed immovably in place in the direction of its longitudinal extension.

2. Device according to claim 1, **characterized in that** the flexible element (13) is endless, that the endless element (13) is placed on the one hand over the wheel (12) on the shaft (11) of the removal gripper (2), and on the other hand over the wheel (25) secured to the lever (6) in the area of the end lying opposite the shaft (11) of the removal gripper (2).

3. Device according to claim 2, **characterized in that** the endless element (13) is a toothed belt or a roller chain.

4. Device according to claim 2 or 3, **characterized in that** the runs of the endless element (13) abut against a deflecting pulley (23) between the wheel (12) secured to the shaft (11) of the removal gripper (2) and the wheel (25) secured to the lever (6), and that the lever (6) can be pivoted relative to the motionless deflecting pulley (23).

5. Device according to claim 4, **characterized in that** the deflecting pulley (23) is arranged coaxially to the pivoting axis (20) of the lever (6).

6. Device according to claim 4 or 5, **characterized in that** the diameter of the deflecting pulley (23) is greater than the diameter of the wheel (12) on the shaft (11) of the removal gripper (2) and the wheel (25) secured to the lever (6).

7. Device according to one of claims 1 to 6, **characterized in that** the drive (7) for pivoting the lever (6) is a crank drive.

8. Device according to claim 7, **characterized in that** the pivoting axis (14) of the lever (6) is arranged between the shaft (11) of the removal gripper (2) and the end of the lever engaged by the drive (7).

9. Device according to claim 7 or 8, **characterized in that** the connecting rod (8) of the crank drive (7) engages the lever (6) in the area of the end of the lever (6) lying opposite the shaft (11) of the removal gripper (2).

10. Device according to one of claims 1 to 9, **characterized in that** at least one suction cup (30) that can be exposed to a vacuum is arranged on the removal gripper (2).

11. Device according to claim 10, **characterized in that** the suction cup (30) can be exposed to a vacuum via a channel provided in the shaft (11) of the removal gripper (2).

12. Device according to claim 11, **characterized in that** the channel has allocated to it a vacuum ventilation (32), which nullifies the vacuum applied to the suction cup (30) at the delivery site.

13. Device according to claim 12, **characterized in that** the vacuum ventilation (32) exhibits an activation plunger (33), which abuts against a stop (34) at the delivery site of the removal gripper (2).

14. Device according to claim 13, **characterized in that** the position of the stop (34) is adjustable.

15. Device according to one of claims 3 to 14, **characterized in that** the wheels (12, 25) are toothed.

## Revendications

1. Dispositif pour transférer des objets en forme de plaque (5) d'un point de collecte dans lequel les objets (5) sont essentiellement alignés verticalement, à un point de distribution dans lequel les objets (5) sont essentiellement alignés horizontalement, comprenant un grappin de collecte (2) qui est mobile d'avant en arrière par un entraînement entre le point de collecte et le point de distribution et qui est tourné pendant le mouvement, sachant que le grappin de collecte (2) est disposé sur un levier (6) en étant rotatif par rapport au levier (6), sachant que le levier (6) peut pivoter d'avant en arrière par un entraînement (7), et sachant que le grappin de collecte (2) est relié à un arbre (11) disposé rotatif dans le levier (6), **caractérisé en ce qu'**une roue (12) est fixée sur l'arbre (11), qu'un élément flexible oblong (13) est placé sur la roue (12) et que l'élément flexible (13) est fixé immobile dans le sens de son prolongement longitudinal.

2. Dispositif selon la revendication 1, **caractérisé en ce que** l'élément flexible (13) est sans fin, que l'élément sans fin (13) est placé d'une part sur la roue (12) sur l'arbre (11) du grappin de collecte (2) et d'autre part sur une roue (25) fixée sur le levier (6) au niveau de l'extrémité opposée à l'arbre (11) du grappin de collecte (2).

3. Dispositif selon la revendication 2, **caractérisé en ce que** l'élément sans fin (13) est une courroie dentée ou une chaîne à rouleaux.

4. Dispositif selon la revendication 2 ou 3, **caractérisé en ce que** les brins intérieurs de l'élément sans fin (13) reposent entre la roue (12) fixée sur l'arbre (11) du grappin de collecte (2) et la roue (25) fixée sur le levier (6), sur un disque de déviation (23), et que le levier (6) peut pivoter par rapport au disque de déviation (23) immobile.

5. Dispositif selon la revendication 4, **caractérisé en ce que** le disque de déviation (23) est disposé coaxialement au pivot (20) du levier (6).

6. Dispositif selon la revendication 4 ou 5, **caractérisé en ce que** le diamètre du disque de déviation (23) est supérieur au diamètre de la roue (12) sur l'arbre (11) du grappin de collecte (2) et de la roue (25) fixée sur le levier (6).

7. Dispositif selon l'une des revendications 1 à 6, **caractérisé en ce que** l'entraînement (7) pour la bascule du levier (6) est un mécanisme à manivelle.

8. Dispositif selon la revendication 7, **caractérisé en ce que** le pivot (14) du levier (6) est disposé entre l'arbre (11) du grappin de collecte (2) et l'extrémité du levier sur laquelle l'entraînement (7) se met en prise.

9. Dispositif selon la revendication 7 ou 8, **caractérisé en ce que** la bielle motrice (8) de l'entraînement à manivelle (7) se met en prise sur le levier (6) au niveau de l'extrémité du levier (6) opposée à l'arbre (11) du grappin de collecte (2).

10. Dispositif selon l'une des revendications 1 à 9, **caractérisé en ce qu'**au moins une ventouse (30) sur lequel un vide peut être appliqué est disposée sur le grappin de collecte (2).

11. Dispositif selon la revendication 10, **caractérisé en ce que** la ventouse (30) est reçoit un vide par un canal prévu dans l'arbre (11) du grappin de collecte (2).

12. Dispositif selon la revendication 11, **caractérisé en ce que** le canal a une ventilation de vide (32) qui enlève le vide présent sur la ventouse (30) dans le point de distribution.

13. Dispositif selon la revendication 12, **caractérisé en ce que** la ventilation de vide (32) présente un poussoir d'actionnement (33) qui repose sur une butée (34) dans le point de distribution du grappin de collecte (2).

14. Dispositif selon la revendication 13, **caractérisé en ce que** la position de la butée (34) est réglable.

15. Dispositif selon l'une des revendications 3 à 14, **caractérisé en ce que** les roues (12, 25) sont dentées.
